# EUROPEAN PATENT APPLICATION

(11) **EP 1 164 465 A2**
(43) Date of publication of application: **19.12.2001**
(21) Application number: 01203510.1
(22) Date of filing: 22.05.1992
(51) Int. Cl.: G06F 3/023

(54) **A method of processing user inputs**

(30) Priority: 31.05.1991 EP 91201314
(62) Divisional of application: 99201019.9
(71) Applicant: Koninklijke Philips Electronics N.V., 5621 BA Eindhoven (NL)
(72) Inventor: Beuk, Leonardus Gerardus, 5656 AA Eindhoven (NL); Kip, Albart Johannes, 5656 AA Eindhoven (NL)
(74) Representative: Groenendaal, Antonius Wilhelmus Maria

(57) **Abstract**

A method for processing user inputs is disclosed comprising the steps of: (a) sensing a pre-selection action by a user with respect to a function invoking element of a user interface device; (b) awaiting sensing of a subsequent selection action by the user with respect to the function invoking element; (c) recognizing passage of a predetermined period of time during which said awaiting has occurred; and (d) providing an indication of the function of the element upon such recognizing including temporarily.

The method may further comprise the step of disclosing a further indication of the function when sensing of the pre-selection action is not detected within a further pre-determined period of time after detecting said pre-selection action,

## Description

The invention relates to a method of processing user inputs made for the purposes of selecting a function invoking element of a user interface device whereby an indication of the function of the element is provided upon sensing a pre-selection action by a user.

US patent No. 4,390,861 discloses a cockpit display system configured, for the purposes of preventing spatial disorientation or vertigo, to indicate visually to a pilot within his normal field of view the identity of a knob or switch which the pilot's hand is touching.

From the German Offenlegungsschrift DE 3700913 a user control interface for a computer device is known in which keyboard keys can be actuated by pressing. Images corresponding to the keys are displayed together on a display screen, providing an indication of the function associated with each key.

From N.T.I.S. Technical notes vol B. no.6, Springfield Virginia, USA page 672 a device is known that provides an audible indication.

Amongst others, it is an object of the invention to provide a method for a user interface device for which the user can avoid being burdened by the display of the indication of the selected function.

According to the present invention, a method of processing user inputs comprising the steps of (a) sensing a pre-selection action by a user with respect to a function invoking element of a user interface device; (b) awaiting sensing of a subsequent selection action by the user with respect to the function invoking element; (c) recognizing passage of a predetermined period of time during which said awaiting has occurred; and (d) providing an indication of the function of the element upon such recognizing including providing such an indication temporarily.

A user interface device employing such a method enables the user to avoid being burdened by the indication through acting quickly, for example within a predetermined time of a few tenths of a second. This is convenient, for example, for an experienced user, or for a user who is already confident about the function of an element after trying a neighboring function invoking element.

The method may further comprise the step of disclosing a further indication of the function when sensing of the pre-selection action is not detected within a further pre-determined period of time after detecting said pre-selection action and in doing so, a hesitant user can be helped, for example, by providing help information explaining the function of the control organ. a useful time interval before providing help information is in the order of several seconds.

These and other advantageous aspects of the device with a human-machine interface according to the invention will be illustrated using the following Figures.

Figures 1a, 1b, 1c show an embodiment of the successive types of actuation of control organs in an device with a human-machine interface

Figure 2 shows a schematic diagram of an implementation of the device with a human-machine interface according to the invention

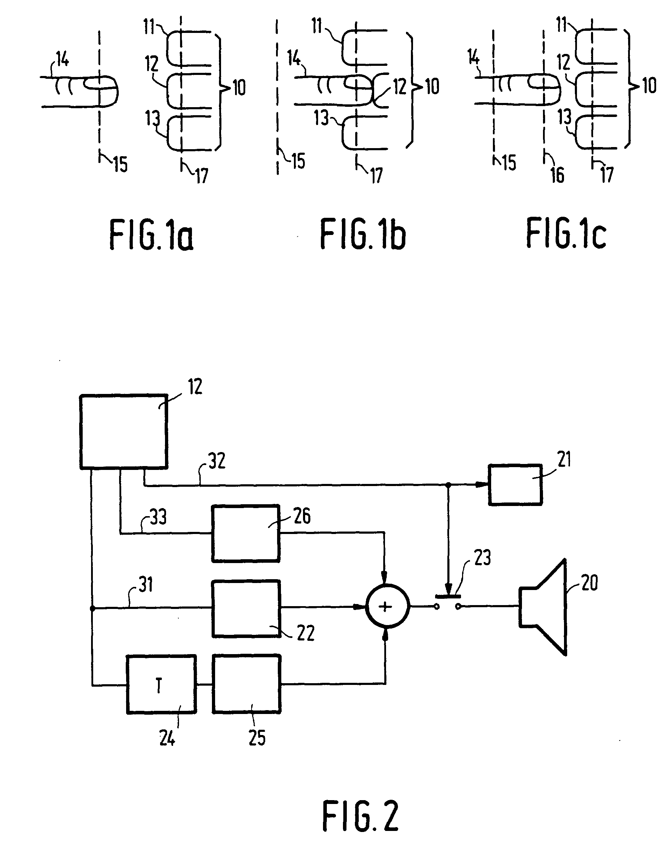

In Figures 1a, 1b, 1c an example of an embodiment a group 10 of control organs 11, 12, 13 for a device with a user control interface is shown. By way of example, the control organs are shown as push buttons which can be pushed by a finger 14. Conventionally, to select one button 12 from the plurality 10, the user must look at the control organs to ensure that the finger is placed on the desired button 12 from the plurality 10.

In vehicles, like cars, (motor)bicycles etcetera in which the user at the same time is responsible for controlling for example the steering wheel and the brakes, it is undesirable that the user should divert the eyes to look at the plurality of control organs 10. Preferably, this should even be made impossible, by placing the control organs outside the normal line of sight from the drivers seat, for example under a cover. Yet, for instance to control a car radio, the user must reach for the control organs; pushing one button reached blindly, that is, without looking at it first, is likely to cause errors, which may be hard to correct -for example in the case of detuning the car radio- or costly -for example in dialing a wrong telephone number on a car phone. An error may even be damaging or dangerous in case the control button pressed erroneously concerns the driving of the car.

To prevent such errors, the device with a user control interface according to the invention provides, upon detection of a user action representative of impending actuation of a control organ, for an indication of the function of that control organ in such a way that the user can still prevent the function from being effected by not pursuing the action beyond the stage that lead the interface to conclude that actuation was physically impending. To prevent the user from being unnecessarily distracted by the mechanism for giving this indication, the indication is made available via a standard output interface used for different types of messages. It is made available temporarily, only for a limited time after detection of impending actuation of the control organ, that is, it is made perceptible to the user only at an attempt to actuate a function. This minimizes distraction to the user, as is essential in a vehicle.

Of course a device with a human machine interface without normally perceptible control organs will be useful in other environments than vehicles as well.

To achieve such an interface, the idea is that an actuating action by the user will have successive stages, the interface effecting the function of the control organ only in the final stage, and in earlier stages providing indication of the function of the control organ selected. Thus, the user may avoid effecting the function by selectively breaking off the action before the final stage is reached.

To illustrate the principle, in Figures 1a, 1b, 1c, the successive stages are triggered by successive distances of approach of the finger 14 to the control organ 12. The distance of the finger may for example be sensed by a proximity sensor operating by means of light, sound or heat. The stage of physically impending actuation occurs in Figure 1a when the finger 14 passes the border indicated by line 15; when the device with a human-machine interface detects this, it provides an indication of the function associated with the control organ 12. Actual actuation is effected in Figure 1b when the finger 14 passes the border 17; this causes the device with a user control interface to effect the function associated with the control organ 12. The impending actuation is a physical precondition for the user to perform actuation.

It may be convenient to provide means for detecting two or more stages of actuation of all control organs. However, often it will be more attractive to do so for control organs corresponding to important functions only or for functions which are not easily reversible. This may be more convenient for economic reasons or for giving a higher alerting effect to the indication.

The control organs are often coherently placed in groups of control organs which control related functions. For example in an automotive environment, the controls for heating are placed together, the controls for the car radio are placed together. It may be desirable to report first the function of the group and then the function of a specific control organ before effecting that function. For example to help the user to find a desired group more quickly by giving a coarse indication of the position of the finger. A way to achieve this is illustrated in Figure 1c, where an intermediate actuation stage is detected when the finger 14 passes the border 16. In an device with a human-machine interface comprising three borders 15, 16, 17, the first border 15 might trigger function group indication, the second border 16, specific control organ information and the third border 17 might cause the function to be effected.

Function group indication is also particularly useful when the function of a group of control organs may be reassigned as a group, for example when the same control organs selectably either control a car telephone or a car radio. In this case the function group indication serves to warn the user when the function group must be reassigned.

Although the invention was discussed above with respect to pushbuttons, the invention is applicable to any kind of control organs, such as for example potentiometers, either of the rotating or of the sliding variety.

It will be appreciated that there exist various possibilities for implementing detection mechanism for actuation and impending actuation of control organs. The only essential point is that the mechanisms are arranged for detecting more than one physical stage in an action that may lead to actuation, and that these stages are arranged in such a way that, when used by a human user, successive stages are physically preconditions for later stages, but that the later stage may also be foregone if the user decides to.

In its conceptually simplest form this is achieved by providing individual control organs with at least two sensing mechanisms, one for detecting the physically impending actuation, another for detecting the actual actuation, the one being sensitive to an earlier stage of approach of a finger than the other. However, for the purpose of the invention, the there need not be a physical relation between means for detecting actuation, physically impending actuation an a particular control organ:
- 1): the detecting mechanisms for actuation and impending actuation may be separated physically, that is, be located at geometrically different locations,
- 2): the detecting mechanisms may be shared among control organs,
- 3): several control organs may be provided as a single physical device.

To illustrate these possibilities: 1), for example if a push button is used for detecting the actuation, and an optical sensor is used for detecting the impending actuation, there is no need to place the pushbutton and the optical sensor together, as long as they sense the finger in the same region. To illustrate 2), using touch sensitive buttons for detecting the impending actuation (that is, for example capacitive sensors, which are actuated by touching rather than by exerting force) and a force sensor to detect the second actuation, the force sensor may be shared by several control organs since touching of a touch sensor is sufficient to determine which control organ is to receive the actual actuation. This has the advantage that it is guaranteed that both the impending and actual actuation will automatically correspond to the same control organ. To illustrate 3), one may use a common touch sensitive surface provided with means to determine the coordinates of a point where it is touched; the coordinate values are used select one virtual control organ and detect the impending or actual actuation for this control organ; in this way one sensor serves for a plurality of control organs. Since according to the invention the functions of the control organs are identified with separate messages, such a touch tablet would require no further distinguishing marks to identify the control organs. Thus, an automobile, or indeed any control interface in any application outside a vehicle, could be provided without visible control organs.

There is also an ample choice of sensors. One implementation uses a proximity sensor for impending actuation (the presence of a proximate object being detected using reflected or absorbed light, sound, electric or magnetic fields etc.) and a push button for detecting the actual actuation. Alternatively, the control organ may be sensitive independently to pushing and touching (without pushing) so as to detect the impending and actual actuation as a consequence of pushing and touching respectively. In another embodiment, the control organ is a normal control organ, for example a pushbutton, which serves to detect the impending actuation; the actual actuation is detected if the button is kept pushed during a predetermined period of time (that is, long enough for the user to realize a mistake from the indication triggered by the first actuation).

In any case, several actuation signals, corresponding to different stages of actuation will have to be derived for the control organ.

Figure 2 shows an embodiment of an device with a human-machine interface according to the invention. For simplicity, only one control organ 12 is shown, which has outputs 31, 32, 33 for three signals corresponding to detection of the first and second stages of impending actuation and the actual actuation respectively (the second stage being optional). In the embodiment, the first detection output is coupled to a sound signal generation circuit 22, which in turn is coupled to a loudspeaker 20. When the impending actuation is detected, for example after crossing the line 15 in Figure 1a, the function of the control organ can thus be identified via the loudspeaker. In a vehicle, the use of such an audible indication has the advantage that it does not distract the eyes of the user the from the road, and that no distracting signals for the user are present until a control organ is almost actuated. Preferably, the signal generator 22 produces a spoken message, for example by replaying a recorded message or using a speech synthesizer, but other signals, such as warning tones which identify functions as dangerous may also be useful.

Alternatively, one may use a display driver 22 and a head up display screen for projecting the information on the windscreen upon detection of impending actuation.

Another output 32 of the control organ 12 is for signaling that the actual actuation is detected, which will effect the function of the control organ. The effecting is symbolized in Figure 2 by connection of the output 32 to an activating input of a subsystem 21 for function execution.

Several elaborations to the device with a human-machine interface, which are not essential to its functioning, but may be added to give substantial improvements to its effectiveness in minimizing the amount of unnecessary distraction of the users attention are also shown in Figure 2 and will now be discussed.

First of all, it may be convenient to interrupt the indication of a function once the function is activated by effecting the actual actuation. This is symbolized in Figure 2 by a switch 23 controlled by the output for the second mode 32 between the signal generator and the loudspeaker. In this way, unnecessary messages are cut short; it may even be convenient to give a slight delay (of the order of a few tenths of a second) to the signal generation 22 in order to enable the unhesitating user to avoid any signaling at all.

Another addition is a second function report generator 26, triggered by detection of a second stage in the action leading up to actuation by the second stage detection output 33. Such stages may for example be detected by detecting a finger at different, decreasing distances to the control organ, but any combination of the detection mechanisms described above may be used, as long as one mechanism will trigger at an earlier stage of the user action than the other. In combination with the first function report generator 22 the first and second stage detection may be used to provide a first function group indication after detection of the first stage of the action and secondly a specific function indication after detecting the second stage of the action. It may be convenient to arrange the device with a user control interface to interrupt the group information if the user activates the specific information.

Furthermore, it may be convenient to provide for additional help information for an extremely hesitating user, by allowing an impending actuation signal to pass through a time duration thresholding circuit 24 for triggering a help information generating circuit. In this way, when the state of impending actuation persists, but is not followed up by actuation within, for example, a few seconds, additional help information can be reported via the loudspeaker 25.

Although Figure 2 has been drawn in the form of a schematic diagram, isolating several functions in separate boxes, it will be appreciated that the part of the interface providing the links between the control organ 12 and the output 20 can also be implemented as a program in a computer system.

## Claims

1. A method of processing user inputs comprising the steps of (a) sensing a pre-selection action by a user with respect to a function invoking element of a user interface device; (b) awaiting sensing of a subsequent selection action by the user with respect to the function invoking element; (c) recognizing passage of a predetermined period of time during which said awaiting has occurred; and (d) providing an indication of the function of the element upon such recognizing.

2. A method according to claim 1 further comprising the step of disclosing a farther indication of the function when sensing of the pre-selection action is not detected within a further pre-determined period of time after detecting said pre-selection action.

3. A method according to claim 1 wherein the indication of the function is made available temporarily, only for a limited time after sensing the pre-selection action.
